# EUROPEAN PATENT SPECIFICATION

(11) **EP 1 772 364 B1**
(45) Date of publication and mention of the grant of the patent: **05.08.2009**
(21) Application number: 06010554.1
(22) Date of filing: 22.05.2006
(51) Int. Cl.: B62M 25/04, B62K 23/06

(54) **Bicycle shift operating device**
Betätigungsvorrichtung für eine Fahrradgangschaltung
Dispositif de changement de vitesses de bicyclette

(30) Priority: 06.10.2005 JP 2005293129; 08.12.2005 JP 2005354857
(43) Date of publication of application: 11.04.2007
(73) Proprietor: SHIMANO INC., Osaka 590-8577 (JP)
(72) Inventor: Kawakami, Tatsuya, Osaka 590-8577 (JP)
(74) Representative: Hofmann, Harald

(56) References cited:
- EP-A1- 0 485 955
- EP-A1- 0 601 211
- JP-B2- 2 730 555
- US-A- 5 222 412

## Description

The present invention relates to an operating device, and particularly relates to a bicycle shift operating device which is mounted to a bicycle.

### [Background Art]

There are bicycles equipped with transmissions such as internal transmissions and external transmissions. To perform shift operations of these transmissions, shift operating devices connected to the transmissions via shift cables are used. As the conventional shift operating devices, lever type transmission having winding levers (one example of an input member) and release levers (one example of the input member) are known. In the lever type shift operating devices, the art of swingly operating the winding lever and the release lever in the same direction (for example, see Patent Document 1) and the art of swingly operating them in the different directions (for example, see Patent Document 2) are known. When the winding lever and the release lever are operated in the pressing direction by a thumb in the former prior art, the shift cable is wound up or released to be able to shift. When the winding lever is operated in the pressing direction by a thumb in the latter prior art, the shift cable is pulled in the winding direction by one step to shift, and when it is operated in the direction pulling to the front side by a forefinger, the shift cable is returned in the releasing direction to shift.
[Patent Document 1] Specification of Japanese Patent No. 2730555
[Patent Document 2] Specification of Japanese Patent No. 3065656

### [Disclosure of the Invention]

### [Problems to be Solved by the Invention]

In both of the above described prior arts, the operating direction of the winding levers is the pressing direction by thumbs. As for the release levers, the operating direction is the same direction as that of the winding lever in the former art, and the operating direction is the different direction from that of the winding lever in the latter art. In EP 0 601 211 (which is considered the closest prior art), the shift operation member comprises a cable winding member rotates with the speed lever when the speed lever is moved from a neutral position to an operation position, in a wire winding direction or in a wire paying out direction. The operating directions of the input members such as the winding lever and the release lever are sometimes desired to be changed in accordance with rider's preference. In the above described prior arts, however, the operating directions of the input members in both cases are limited to the fixed directions, and cannot be adapted to the rider's preference.

An object of the present invention is to make it possible to adapt the operating direction of the input member to rider's preference in the bicycle shift operating device having levers.

### [Means for Solving the Problems]

A bicycle shift operating device according to claim 1 includes a mounting part mountable to the bicycle, a cable catching body, a position holding mechanism, an action member, and an input member. The cable catching body is mounted to the mounting part movably in a cable pulling direction and a cable releasing direction. The position holding mechanism selectively holds the cable catching body in any one of a plurality of holding positions. The action member is a member mounted to the mounting part swingably around a first shaft, and causes the position holding mechanism to act by swinging to an action position from a neutral-position to move the cable catching body in only one of the cable pulling direction or the cable releasing direction. The input member is a member that is mounted to the action member and moves the action member to the action position from the neutral position by moving in a first direction and a second direction.

When the input member is moved in the first direction or the second direction in this shift operating device, the action member moves to the operating position from the neutral position in either case. When the action member moves to the action position from the neutral position, the position holding mechanism is caused to act, and the cable catching body is moved in only one of the cable pulling direction or the cable releasing direction. As a result, the shift cable moves in the cable pulling direction or in the cable releasing direction to perform a shift operation. In this case, the action member moves to the action position from the neutral position to be able to move the cable catching body in the cable pulling direction or in the cable releasing direction by the movement of the input member in both the first direction and the second direction, and therefore, the operating direction of the input member can be adapted to rider's preference.

In the bicycle shift operating device according to claim 1, the input member is movably mounted either to the action member swingably around a second shaft or to the mounting part swingably around a third shaft. In this case, the input member and the action member can be integrally moved and separately moved, and therefore, the action member is moved to the action position from the neutral position with the respective actions of the input member, whereby the operating direction of the input member can be easily adapted to rider's preference.

In the bicycle shift operating device according to claim 2, in the device as set forth in the claim 1, the input member is mounted to the action member swingably around a second shaft spaced from the first shaft. In this case, the input member and the action member both swing, and therefore, the input member and the action member are supported by the shaft. Therefore, the support structure of the input member and the action member is simplified.

In the bicycle shift operating device according to claim 3, in the device as set forth in the claims 1 or 2, the input member and the action member respectively have first abutting portions which contact each other when the input member moves in the first direction, and integrally swing around the first shaft when the input member moves in the first direction. When the input member moves in the first direction in this case, the action member and the input member contact each other at their first abutting portions, and the action member swings around the first shaft integrally with the input member to move to the shift position from the neutral position. Here, the input member and the action member are brought into contact with each other at the first abutting portions to move both of them integrally, and therefore, the action member can be easily moved to the action position when the input member is moved in the first direction.

In the bicycle shift operating device according to claim 4, in the device as set forth in any one of the claims 1 to 3, the input member and the mounting part respectively have second abutting portions which contact each other when the input member moves in the second direction, and the input member swings around the second shaft and the action member swings around the first shaft, when the input member moves in the second direction. In this case, when the input member swings in the second direction, the input member swings around the second shaft by the contact of the second abutting portions and the mounting portion of the input member moves in the reverse direction. Thereby, the action member swings around the first shaft toward the action position. Here, the mounting part and the input member are brought into contact with each other at the second abutting portions to swing the action member around the first shaft, and therefore, when the input member is moved in the second direction, the action member can be easily moved to the action position.

In the bicycle shift operating device according to claim 5, in the device as set forth in the claim 4, the first and second abutting portions are in contact with each other when the action member is in the neutral position. In this case, the input member contacts all the abutting portions, and therefore, even if the input member is moved in either direction of the first or the second direction, the action member can be quickly moved toward the action position.

In the bicycle shift operating device according to claim 6, in the device as set forth in any one of the claims 1 to 5, a first biasing member, which has one end caught at the mounting part and the other end caught at the action member, and biases the action member in a direction of the neutral position from the action position, is further included. In this case, the action member is biased toward the neutral position, and therefore, when the operation by the input member is finished, the action member returns to the neutral position. Therefore, in the shift operation, the action member always acts from the neutral position, and there is no need to return the action member to the neutral position.

In the bicycle shift operating device according to claim 7, in the device as set forth in the claim 6, a second biasing member, which has one end caught at the action member and the other end caught at the input member, and biases the action member and the input member in a direction to bring them close to each other, is further included. In this case, when the operation by the input member is finished, the action member and the input member come close to each other, and therefore, the positional relationship of the input member and the action member can be always kept constant.

In the bicycle shift operating device according to claim 8, in the device as set forth in the claim 1, the input member is movably mounted to the mounting part. In this case, the action member and the input member are separately movable, and therefore, both of them are linked so that the action member moves to the action position from the neutral position with respect to the operation of the input member in both directions, whereby the operating direction of the input member can be easily adapted to rider's preference.

In the bicycle shift operating device according to claim 8, in the device as set forth in the claim 1, the input member is mounted to the mounting part swingably around a third shaft which is spaced from the first shaft. In this case, the input member and the action member swing together, and therefore, the input member and the action member only have to be supported by the shaft. Therefore, the support structure of the input member and the action member is simplified.

In the bicycle shift operating device according to claim 9, in the device as set forth in the claim 8, the input member and the action member respectively have third and fourth abutting portions which contact each other when the input member moves in the first direction, and integrally swing around the first shaft when the input member moves in the first direction. In this case, when the input member moves in the first direction, the third and the fourth abutting portions of the action member and the input member contact each other, and the action member swings around the first shaft integrally with the input member to move to the action position from the neutral position. Here, both of the input member and the action member are moved by being brought into contact with each other at the third and the fourth abutting portions, and therefore, when the input member is moved in the first direction, the action member can be easily moved to the action position.

In the bicycle shift operating device according to claim 10, in the device as set forth in any one of the claims 8 and 9, the input member and the action member respectively have fifth abutting portions which contact each other when the input member moves in the second direction, the input member swings around the third shaft, and the action member swings around the first shaft, when the input member moves in the second direction. When the input member swings in the second direction in this case, the input member swings around the third shaft by the contact of the fifth abutting portions, and the action member swings around the first shaft toward the action position. Here, the action member is swung around the first shaft by contacting the input member and the action member at the fifth abutting portions, and therefore, when the input member is moved in the second direction, the action member can be easily moved to the action position.

In the bicycle shift operating device according to claim 11, in the device as set forth in any one of the claim 8 to 10, a third biasing member that has one end caught at the mounting part and the other end caught at the action member, and biases the action member in a direction of the neutral position from the action position is further included. In this case, the action member can be easily returned to the neutral position by only taking a hand off the input member.

The bicycle shift operating device according to claim 12, in the device as set forth in any one of the claims 8 to 11, the input member has a long groove portion in a circular arc shape with the first shaft as a center and the third shaft capable of being disposed at one end when the action member is disposed in the neutral position. In this case, even if the third shaft is provided, the input member can be moved in the first direction around the first shaft.

In the bicycle shift operating device according to claim 13, in the device as set forth in any one of the claims 1 to 12, the position holding mechanism has a positioning body movable integrally with the cable catching body and having a plurality of positioning teeth, and a positioning member that engages with the positioning tooth and holds the cable catching body in any one of the plurality of holding positions. In this case, the cable catching body can be reliably held in the holding position by the positioning tooth and the positioning member.

In the bicycle shift operating device according to claim 14, in the device as set forth in the claim 13, the positioning member is mounted to the mounting part movably between an engaging position where it engages with the positioning tooth and a release position where it does not engage with the above described positioning tooth, and is moved to the release position from the engaging position by swing of the action member to the action position from the neutral position. In this case, the position holding of the positioning body can be released in either case of the operations in both directions of the input member.

### [Advantages of the Invention]

According to the present invention, the action member moves to the action position from the neutral position to move the cable catching body in the cable pulling direction or in the cable releasing direction by the movement of the input member in both of the first direction and the second direction, and therefore, the operating direction of the input member can be adapted to rider's preference.

### [Best Mode for Carrying Out the Invention]

### <First Embodiment>

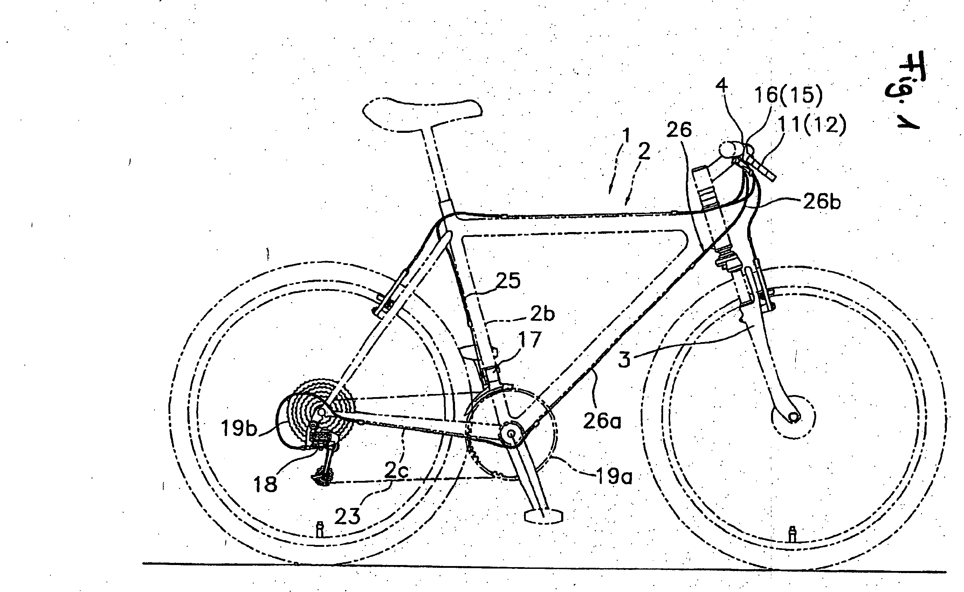

In Figure 1, a bicycle 1 equipped with a first embodiment of the present invention includes a frame 2 having a suspension fork 3, and a handlebar 4 fixed to an upper portion of the suspension fork 3. A front derailleur 17 constructing an external transmission is mounted to an intermediate portion of the frame 2, and a rear derailleur 18 is mounted to a rear end portion of the frame 2. The front derailleur 17 is disposed at a lower portion of a seat tube 2b of the frame 2, for example, and guides a chain 23 to any of sprockets of a front chain wheel 19a having, for example, three sprockets. The rear derailleur 18 is disposed at a rear end portion of a chain stay 2c of the frame 2, and guides the chain 23 to any of sprockets of a rear chain wheel 19b having, for example, eight sprockets. The front derailleur 17 and the rear derailleur 18 are connected to front and rear shift operating parts (one example of a shift operating device) 15 and 16 via a front and a rear shift cables 25 and 26.

The front and rear shift operating parts 15 and 16 are disposed inside brake levers 12 and 11 to be close to the brake levers 12 and 11. The front shift operating part 15 and the rear shift operating part 16 are in the mirror image relationship, and have substantially the same construction and perform substantially the same action except for the number of shift steps, and therefore, only the rear shift operating part 16 will be described in the explanation of the construction and action hereunder.

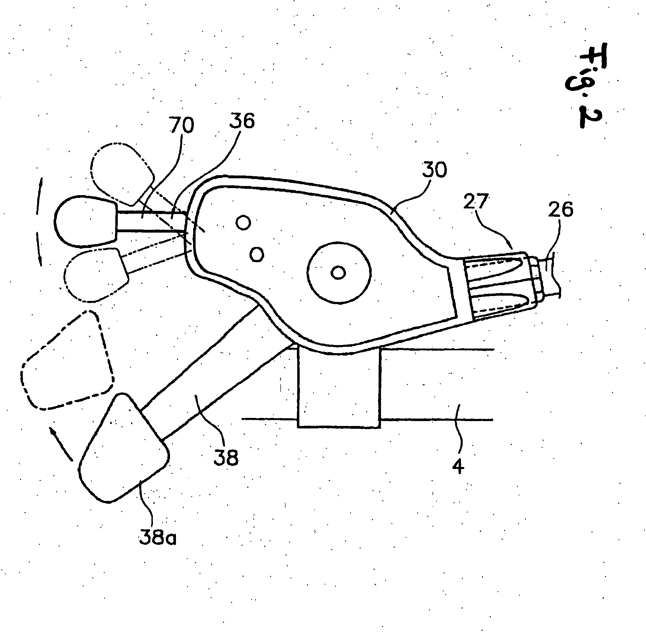

The rear shift operating part 16 has a mounting part 30 mountable to the handlebar 4 inside the front brake lever 11 as shown in Figure 2. In Figure 2, the rear shift operating part 16 is seen from the lower side. The mounting part 30 may be integrally fixed to a bracket of the front brake lever 11.

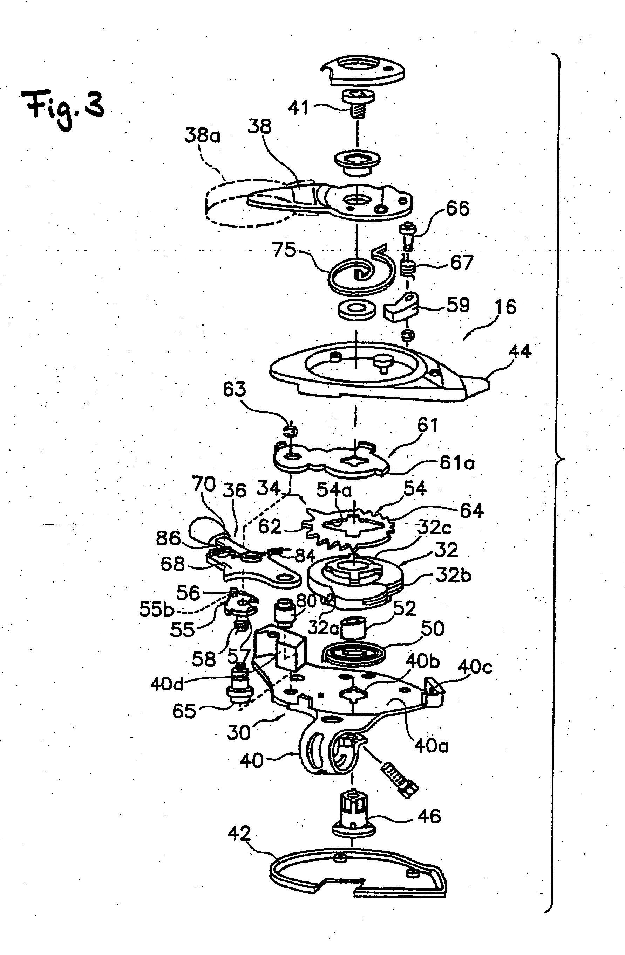

As shown in Figure 3, the rear shift operating part 16 has a winding body (one example of a cable catching body) 32 which is mounted to the mounting part 30 movably in a cable pulling direction and a cable releasing direction of a shift cable 26, a position holding and releasing mechanism (one example of a position holding mechanism) 34 which selectively holds the winding body 32 in any one of a plurality of holding positions corresponding to a plurality of shift positions of the rear derailleur 18, a first operating member 36 having an action member 68 and an input member 70 to perform a cable releasing operation, and a second operating member 38 for performing a cable winding (pulling) operation. The rear shift operating part 16 also has a first coil spring (one example of a first biasing member) 84 disposed between the action member 68 and the mounting part 30 and a second coil spring (one example of a second biasing member) 86 which is disposed between the action member 68 and the input member 70.

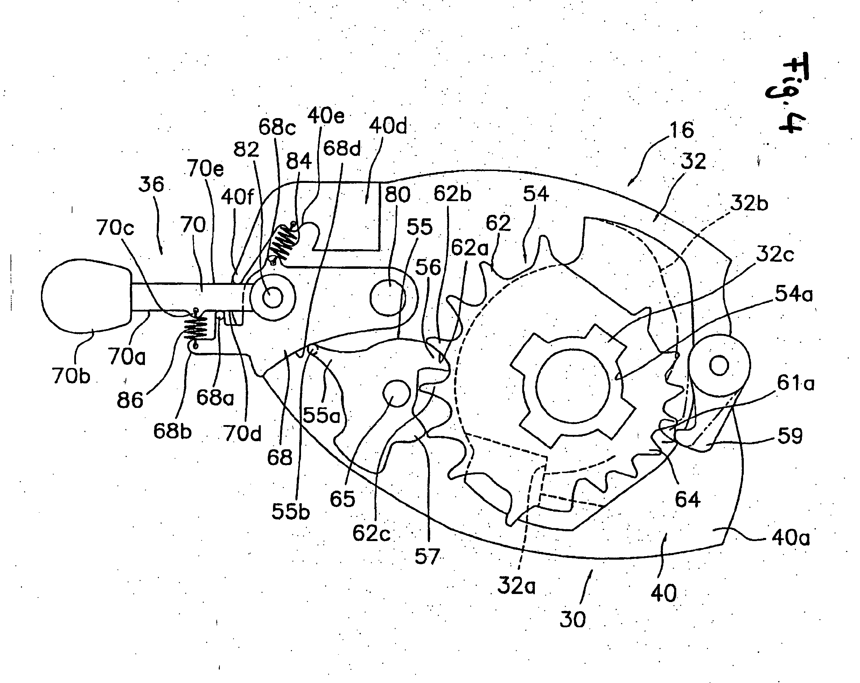

As shown in Figures 3 and 4, the mounting part 30 has a bracket 40 of a metal plate, for example, mountable to the handlebar 4 with a fastening bolt, a cover 42 which is attached to the bracket 40, and a cover 44 which is attached to the bracket 40 to be spaced from the cover 42. The bracket 40 has a plane 40a on which the winding body 32 is disposed, and an opening 40b to which a rotary shaft 46 is mounted to be incapable of rotating. The rotary shaft 46 penetrates through the opening 40b to extend upward. A tip end of the rotary shaft 46 is fixed by a fixing bolt 41, and fixes the second operating member 38. A female screw portion 40c in which an outer catching part 27 for catching an outer casing 26b (Figure 1) of the rear shift cable 26 is screwed is formed in the bracket 40. A wall portion 40d having a spring hooking portion 40e at which one end of the first coil spring 84 is hooked is formed near the first operating member 36. A third restricting portion (one example of a second abutting portion) 40f which contacts a side surface of the input member 70 is formed at a tip end of the wall portion 40d.

The winding body 32 is movable along a plane parallel with the plane 40a of the bracket 40. Specifically, the winding body 32 is mounted to the rotary shaft 46 via a bush 52 to be movable (rotatable) in the cable winding (pulling) direction and cable releasing direction. The winding body 32 has an inner catching portion 32a which catches a cable nipple fixed to a tip end of an inner cable 26a (Figure 1) of the rear shift cable 26 and a cable winding groove 32b for winding up the inner cable 26a, on its outer peripheral surface. The winding body 32 is biased in the cable releasing direction (counterclockwise in Figure 4) by a spring member 50 such as a torsion coil spring. The spring member 50 has one end caught at the winding body 32 and the other end caught at the bracket 40 which will be described later. An engaging projection 32c for linking to and rotating a positioning body 54 which will be described later of the position holding and releasing mechanism 34 is formed on a top surface of the winding body 32.

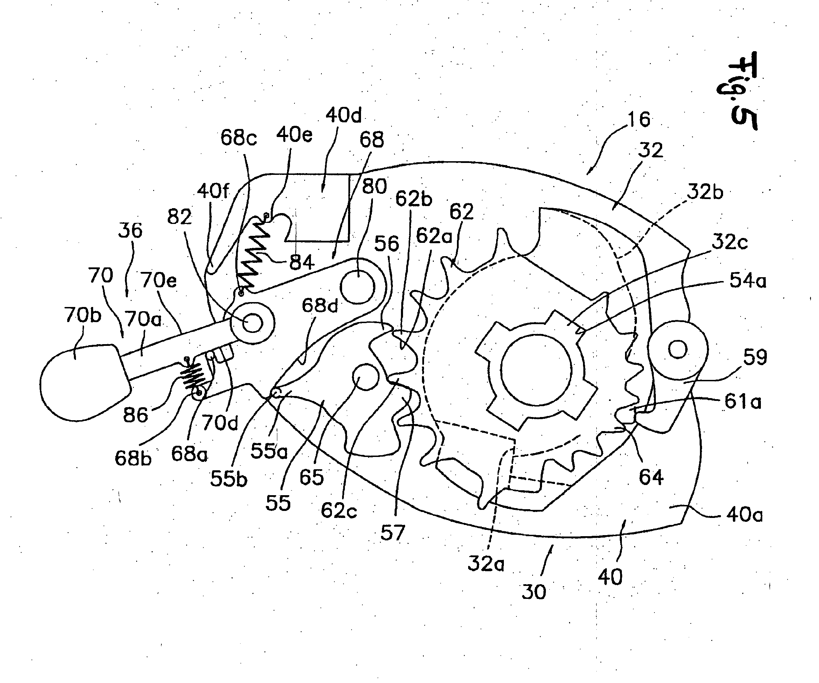

The position holding and releasing mechanism 34 has, for example, eight positioning teeth 62 and seven feed teeth 64, and has the positioning body 54 which links to the winding body 32, and a positioning claw 56 which moves along a parallel surface with the plane 40a between an engaging position shown in Figure 4 where it engages with the positioning tooth 62 and a release position shown in Figure 5 where it does not engage with the positioning tooth 62. Also, the position holding and releasing mechanism 34 has a rotation preventing claw 57 which moves along the parallel surface with the plane 40a between a contact position shown in Figure 5 where it engages with the positioning tooth 62 at a different position from the positioning claw 56, and a separation position shown in Figure 4 where it does not engage with the positioning tooth 62, a feed claw 59 which moves to a feed position shown by the two-dot chain line in Figure 4 where it engages with the feed tooth 64 and a release position shown by the solid line in Figure 4 where it separates therefrom, and a holding plate 61 (see Figure 3) which is mounted to the rotary shaft 46 to be incapable of rotating.

The positioning body 54 has an engaging hole 54a which engages with the engaging projection 32c of the winding body 32, and moves integrally with the winding body 32. The positioning teeth 62 and the feed teeth 64 are provided in the number corresponding to the number of shift positions of the rear derailleur 18, and are formed at the outer peripheral surface of the positioning body 54 to project in the diameter direction. The positioning body 54 as well as the winding body 32 is biased in the cable releasing direction (counterclockwise in Figure 4) by the spring member 50. The spaces of the positioning teeth 62 and the feed teeth 64 are set based on the cable moving amount which is set in accordance with the shift position of the rear derailleur 18.

The positioning claw 56 and the rotation preventing claw 57 are integrally formed at a swing body 55 which is swingably mounted to a swing shaft 65 vertically provided at the bracket 40. The swing body 55 is biased clockwise in Figure 4 by a spring member 58 such as a torsion coil spring so that the positioning claw 56 is disposed at the engaging position. An engaging projected portion 55a which projects in the diameter direction is formed at an outer peripheral surface of the swing body 55. An engaging pin 55b capable of contacting a pressing portion 68d which will be described later formed on a side surface of an action member 68 that will be described later is vertically provided downward at a tip end portion of the engaging projected portion 55a.

The positioning claw 56 contacts a catching surface 62a of the positioning tooth 62 and inhibits rotation in the cable releasing direction of the positioning body 56 which is biased counterclockwise. When the rotation preventing claw 57 moves to the contact position, it contacts a positioning tooth 62c which is in the cable releasing direction by one tooth from the positioning tooth 62b which the positioning claw 56 contacts, and prevents the positioning body 54 from continuously rotating without stopping in the cable releasing direction after the positioning claw 56 separates therefrom as shown in Figure 5. When the rotation preventing claw 57 is in the contact position, the positioning claw 56 is disposed at the position where it rides over the positioning tooth 62b with which it engages, as shown in Figure 5.

The feed claw 59 is swingably mounted to a swing shaft 66 vertically provided at the second operation member 38 as shown in Figure 3. The feed claw 59 is biased clockwise in Figure 4 by a spring member 67 such as a torsion coil spring so that the feed claw 59 is disposed in the feed position.

The holding plate 61 is mounted to the rotary shaft 46 to be incapable of rotating and fixed to an upper end of the swing shaft 65 by a snap ring 63, as shown in Figure 3. An abutting portion 61a for disposing the feed claw 59 at the release position side when the second operating member 38 is in the operation start position which will be described later is formed at the holding plate 61 to project toward the feed claw 59. Accordingly, the feed claw 59 is always disposed in the release position when the second operating member 38 is in the operation start position. When the second operating member 38 is operated toward the operation finishing position from the operation start position and the tip end of the feed claw 59 passes the abutting portion 61a, the feed claw 59 is biased by the spring member 67 and swings toward the feed position.

As shown in Figures 3 and 4, the first operating member 36 has the action member 68 which is mounted swingably around a swing shaft (one example of a first shaft) 80 vertically provided at the bracket 40, and the input member 70 which is mounted around a swing shaft (one example of a second shaft) vertically provided at the intermediate portion of the action member 68 to be spaced from the swing shaft 80. Both the swing shafts 80 and 82 are disposed to be substantially parallel with each other. The action member 68 causes the position holding and releasing mechanism 34 to act by the swing to the action position shown in Figure 5 from the neutral position shown in Figure 4 to move the winding body 32 in the cable releasing direction. Specifically, the action member 68 is moved to the action position from the neutral position by the input member 70 to move the positioning claw 56 to the release position from the engaging position. The action member 68 has a first restricting portion (one example of a first abutting portion) 68a, a first spring hooking portion 68b and a second spring hooking portion 68c and the pressing portion 68d which engages with the engaging pin 55b on its side surface.

The first restricting portion 68a is disposed between the swing shaft 80 and the first spring hooking portion 68b, and abuts on a second restricting portion (one example of a first abutting portion) 70d provided at a side surface of the input member 70. The first restricting portion 68a is provided to swing the input member 70 and the action member 68 integrally around the swing shaft 80 when the input member 70 is operated in a first direction to the lower side in Figure 4. The first spring hooking portion 68b is provided at a tip end of the action member 68 and one end of a second coil spring 86 is hooked at the first spring hooking portion 68b. The second coil spring 86 biases the input member 70 and the action member 68 in the direction to be close to each other. The second spring hooking portion 68c is disposed at the side surface at the opposite side from the first spring hooking portion 68b, and the other end of a first coil spring 84 is hooked at the second spring hooking portion 68c. The first coil spring 84 is provided to bias the action member 68 to the neutral position where it comes close to the wall portion 40d of the bracket 40. The pressing portion 68d is provided for rotating the swing body 55 via an engaging pin 55b counterclockwise linked to the swing of the action member 68 to the action position from the neutral position, and for moving the positioning claw 56 to the release position from the engaging position. The pressing portion 68d is constructed by an inclined surface which is inclined as curving smoothly.

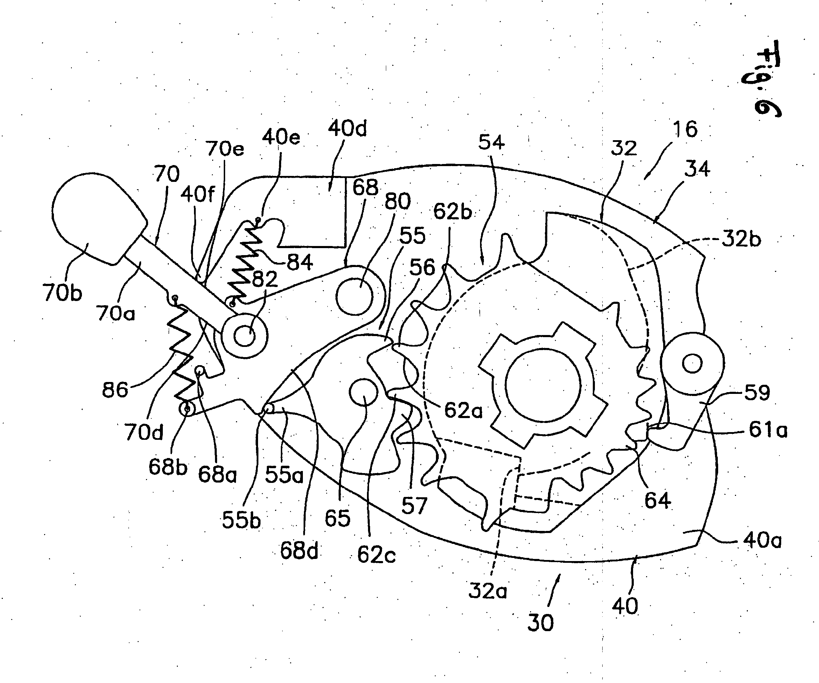

The input member 70 is a member that moves in the first direction shown in Figure 5 and in a second direction shown in Figure 6. The input member 70 has an arm member 70a which is swingably mounted to the swing shaft 82 vertically provided at the action member 68, and a knob portion 70b which is fixed to a tip end of the arm member 70a. A spring hooking portion 70c is formed at a position, which is opposed to the first spring hooking portion 68b, of an intermediate portion of the arm member 70a. The other end of the second coil spring 86 is hooked at the spring hooking portion 70c. The second restricting portion 70d is provided at a side surface between the spring hooking portion 70c and a base end portion. A fourth restricting portion (one example of a second abutting portion) 70e which abuts on a third restricting portion 40f of the wall portion 40d is provided at the side surface at the opposite side from the second restricting portion 70d.

The second operating member 38 is mounted to the rotary shaft 46 swingably to the operation start position shown by the solid line and the operation finishing position shown by the dashed line in Figure 2. The second operating member 38 is biased to the operation start position by a spring member 75 such as a spiral spring. A knob portion 38a is provided at one end side of the second operating member 38. The swing shaft 66 which supports the feed claw 59 is vertically provided at the other end side with the swing center of the first operating member 38 therebetween.

The front shift operating part 15 has the same structure in the mirror image relationship with the rear shift operating part 16, and is provided inside the rear brake lever 12.

Next, a shift action of the rear shift operating part 16 will be described.

The action in the cable releasing direction is as follows.

As shown in Figures 4 and 5, when the knob portion 70b of the input member 70 of the first operating member 36 is operated in the first direction, the second restricting portion 70d of the input member 70 contacts the first restricting portion 68a to press the action member 68, and the input member 70 and the action member 68 integrally swing around the swing shaft 80 to the action position from the neutral position counterclockwise in Figure 4. When the action member 68 swings to the action position, the swing body 55 swings counterclockwise in Figure 4 from a state in which the positioning claw 56 is in the engaging position shown in Figure 4, and the positioning claw 56 moves to the release position shown in Figure 5 from the engaging position and separates from the positioning body 54. As a result, the positioning body 54 is biased to the cable releasing direction by the spring member 50, and therefore, the positioning body 54 rotates in the cable releasing direction. However, when the positioning claw moves to the release position, the rotation preventing claw 57, which is formed at the swing body 55 integrally with the positioning claw 56, moves to the contact position to stop the rotation of the swing body 55. Therefore, the positioning body 54 stops at the position where the positioning claw 56 rides over the positioning tooth 62b with which the positioning claw 56 engages.

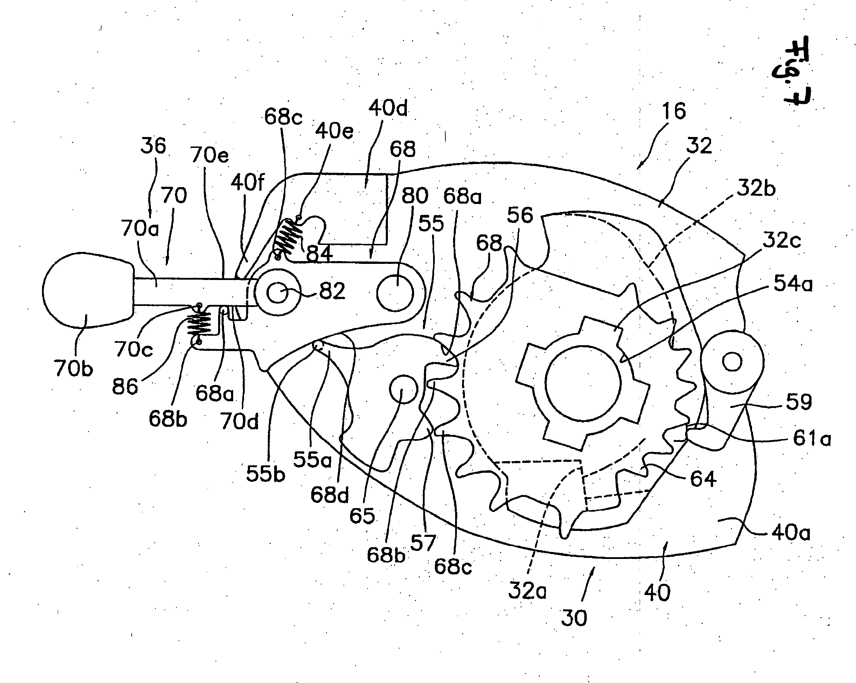

When the operation is stopped and a hand is taken off the knob portion 70b in this state, the action member 68 is returned to the neutral position by the first coil spring 84 as shown in Figure 7. Then, the input member 70 is also returned to the original position with the action member 68 by the second restricting portion 70d being pressed by the first restricting portion 68a as shown in Figure 7. Since at this time, in the swing body 55, the positioning claw 56 is biased to be positioned in the engaging position by the spring member 58, the swing body 55 swings clockwise, and the positioning claw 56 is disposed in the engaging position again. As a result, the positioning body 54 rotates in the cable releasing direction by the amount of one positioning tooth 62 and stops, and the winding body 32 also rotates in the cable releasing direction by the amount of one shift position.

Meanwhile, when the knob portion 70b of the input member 70 of the first operating member 36 is operated in the second direction as shown in Figures 4 and 6, the fourth restricting portion 70e of the input member 70 contacts the third restricting portion 40f and the input member 70 swings clockwise around the swing shaft 82. Thereby, the action member 68 swings counterclockwise in Figure 4 around the swing shaft 80 as at the time of the operation in the first direction. When the action member 68 swings to the action position, the swing body 55 swings counterclockwise in Figure 4 from the state in which the positioning claw 56 is in the engaging position shown in Figure 4, and the positioning claw 56 moves to the release position shown in Figure 6 from the engaging position and separates from the positioning body 54. As a result, the positioning body 54 is biased in the cable releasing direction by the spring member 50, and therefore, the positioning body 54 rotates in the cable release direction. However, when the positioning claw moves to the release position, the rotation preventing claw 57 formed at the swing body 55 integrally with the positioning claw 56 moves to the contact position to stop the rotation of the swing body 55. Therefore, the positioning body 54 stops at the position where the positioning claw 56 rides over the positioning tooth 62b with which the positioning claw 56 engages.

When the operation is stopped and the hand is taken off the knob portion 70b in this state, the action member 68 returns to the neutral position by the first coil spring 84. Then, the fourth restricting portion 70e is in contact with the third restricting portion 40f, and therefore, the input member 70 also swings counterclockwise around the swing shaft 82 and returns to the original position as shown in Figure 7. Since in the swing body 55, the positioning claw 56 is biased to be disposed at the engaging position by the spring member 58 at this time, the swing body 55 swings clockwise, and the positioning claw 56 is disposed in the engaging position again. As a result, the positioning body 54 rotates in the cable releasing direction by the amount of one positioning tooth 62 and stops, and the winding body 32 also rotates in the cable releasing direction by the amount of one shift position.

Here, the action member 68 moves in the same direction to the action position from the neutral position even when the input member 70 is operated in either the first direction or the second direction. Therefore, the winding body 32 can be moved in the cable releasing direction by movement of the input member 70 in either direction of the first direction or the second direction, and the operating direction of the input member 70 can be adapted to rider's preference. Since the winding body 32 and the positioning claw 56 can be disposed in parallel, the shift operating part 16 can be compactly disposed.

The action in the cable winding direction is as follows.

When the second operating member 38 is operated in the direction of the operation finishing position from the operation start position, the feed claw 59 is moved to the feed position by being biased by the spring member 67 and engages with the feed tooth 64, when the tip end passes the abutting portion 61a. As a result, the positioning body 54 rotates in the cable winding direction (clockwise in Figure 4) by the swing of the second operating member 38. The positioning claw 56 is in the engaging position until the positioning body 54 rotates, and in response to the swing of the second operating member 38, the positioning claw 56 is pressed by the adjacent positioning tooth 62c to the positioning tooth 62b by which it is positioned. As a result, the swing body 55 rotates counterclockwise, and the positioning claw 56 moves to the release position side. At this time, the engaging projected portion 55a rotates counterclockwise, and separates from the pressing portion 68d. In addition, since the action member 68 is biased to the neutral position side by the first coil spring 84, the action member 68 and the input member 70 do not move. When the second operating member 38 is further swung in the direction of the operation finishing position, the positioning tooth 62c rides over the positioning claw 56, and the positioning claw 56 is moved to the engaging position with the positioning tooth 62c. As a result, the positioning body 54 rotates in the cable winding direction by the amount of one positioning tooth 62 and stops, and the winding body 32 also rotates in the cable winding direction by the amount of one shift position. When the second operating member 38 is further swung toward the operation finishing position, the same action is repeated, and the winding body can be further rotated in the cable winding direction by the amount of one tooth.

### <Second Embodiment>

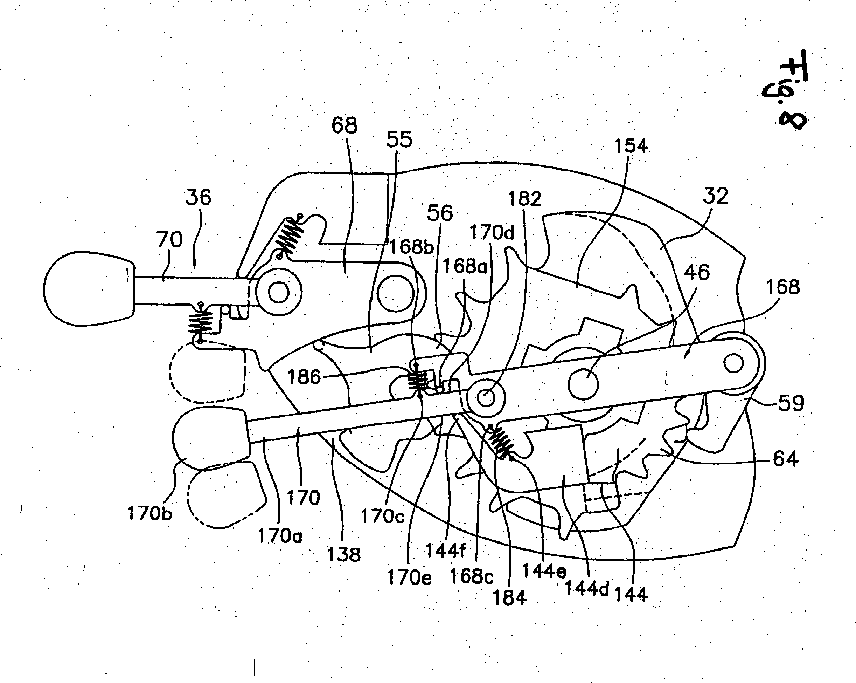

In the first embodiment, the first operating member which performs the cable releasing operation is constructed by the action member and the input member, but as shown in Figure 8, a second operating member 138 may be constructed by an action member 168 and an input member 170. Though in Figure 8, the first operating member 36 is also constructed by the action member 68 and the input member 70 as in the above described embodiment, the first operating member 36 may be formed by one piece to perform cable releasing operation by the operation in one direction. In the explanation hereunder, the same member as in the first embodiment are assigned with the same reference numerals, and the members corresponding to those in the first embodiment are assigned with the reference numerals of the hundreds digits of the reference numerals in the first embodiment by changing them. In the second embodiment, the other construction and operation except for the second operating member 138 and the cover 144 are the same as those in the first embodiment, and therefore, the explanation thereof will be omitted.

In Figure 8, the second operating member 138 has the action member 168 which is mounted swingably around the rotary shaft (one example of the first shaft) 46 which penetrates through a cover 144 of the mounting part 30, and the input member 170 which is mounted around a swing shaft (one example of the second shaft) 182 which is vertically provided at an intermediate portion of the action member 168 to be spaced from the rotary shaft 46. On the cover 144, a wall portion 144d having a spring hooking portion 144e at which one end of a first coil spring 184 is hooked is formed near the second operating member 138. A third restricting portion (one example of the second abutting portion) 144f which contacts a side surface of the input member 170 is formed at a tip end of the wall portion 144d.

The rotary shaft 46 and the swing shaft 182 are disposed substantially parallel with each other. The feed claw 59 is swingably mounted to a tip end of the action member 168. The action member 168 causes the position holding and releasing mechanism 34 to act by swing to the clockwise action position from the neutral position shown in Figure 8 to move the winding body 32 in the cable winding direction.

The action member 168 has a first restricting portion (one example of the first abutting portion) 168 which abuts on the input member 170, a first spring hooking portion 168b and a second spring hooking portion 168c on its side surface.

The first restricting portion 168a is disposed between the rotary shaft 46 and the first spring hooking portion 168b, and abuts on a second restricting portion (one example of the first abutting portion) 170d which is provided on a side surface of the input member 170. The first restricting portion 168a is provided for integrally swinging the input member 170 and the action member 168 around the rotary shaft 46 when the input member 170 is operated in the first direction toward the upper side in Figure 8. The first spring hooking portion 168b is provided at a tip end of the action member 168, and one end of a second coil spring 186 is hooked at the first spring hooking portion 168b. The second coil spring 186 biases the input member 170 and the action member 168 in the direction to be close to each other. The second spring hooking portion 168c is disposed at the side surface at the opposite side from the first spring hooking portion 168b, and the other end of the first coil spring 184 is hooked at the second spring hooking portion 168c. The first coil spring 184 is provided to bias the action member 168 to the neutral position where it is close to the wall portion 144d of the cover 144.

The input member 170 is a member which moves in the first direction (upper side) shown by the broken line in Figure 8 and the second direction (lower side). The input member 170 has an arm member 170a which is swingably mounted to the swing shaft 182 vertically provided at the action member 168, and a knob portion 170b fixed to a tip end of the arm member 170a, as shown in Figure 8. A spring hooking portion 170c is formed at the position, which is opposed to the first spring hooking portion 168b, of the intermediate portion of the arm member 170a. The other end of the second coil spring 186 is hooked at the spring hooking portion 170c. The second restricting portion 170d is provided at the side surface between the spring hooking portion 170c and a base end portion. A fourth restricting portion (one example of the second abutting portion) 170e which abuts on the third restricting portion 144f of the wall portion 144d is provided on the side surface at the opposite side from the second restricting portion 170d.

The action in the cable winding direction is as follows.

When the knob portion 170b of the input member 170 is operated in the first or the second direction, the action member 168 is swung to the action position from the neutral position clockwise around the rotary shaft 46 as in the above described embodiment and moves the feed claw 59 clockwise around the rotary shaft 46 in either case. When the tip end of the feed claw 59 passes the abutting portion 61a, the feed claw 59 moves to the feed position by being biased by the spring member 67 and engages with the feed tooth 64. As a result, the positioning body 54 rotates in the cable winding direction (clockwise in Figure 4) by the swing of the action member 168. The positioning claw 56 is in the engaging position until the positioning body 54 rotates, but in response to the swing of the action member 168, the positioning claw 56 is pressed by the adjacent positioning tooth 62c to the positioning tooth 62b by which it is positioned. As a result, the swing body 55 rotates counterclockwise, and the positioning claw 56 moves to the release position side. When the action member 168 is further swung in the direction of the operation finishing position by the input member 170, the positioning tooth 62c rides over the positioning claw 56, and the positioning claw 56 is moved to the engaging position with the positioning tooth 62c. As a result, the positioning body 54 rotates in the cable winding direction by the amount of one positioning tooth 62 and stops, and the winding body 32 also rotates in the cable winding direction by the amount of one shift position. When the action member 168 is further swung toward the operation finishing position by the input member 170, the same action is repeated, and the winding body can be further rotated in the winding direction by the amount of one tooth.

As described above, the cable winding operation may be made possible in both of the two directions.

### <Third Embodiment>

In the above described first and second embodiments, the second coil spring 86 is provided, but the second coil spring 86 may not be provided. The positions of the first restricting portion 68a and the second restricting portion 70d as the first abutting portion are not limited to those in the above described two embodiments. In a third embodiment, the other constructions than the first operating member are the same as those in the first embodiment, and therefore, the explanation of them will be omitted.

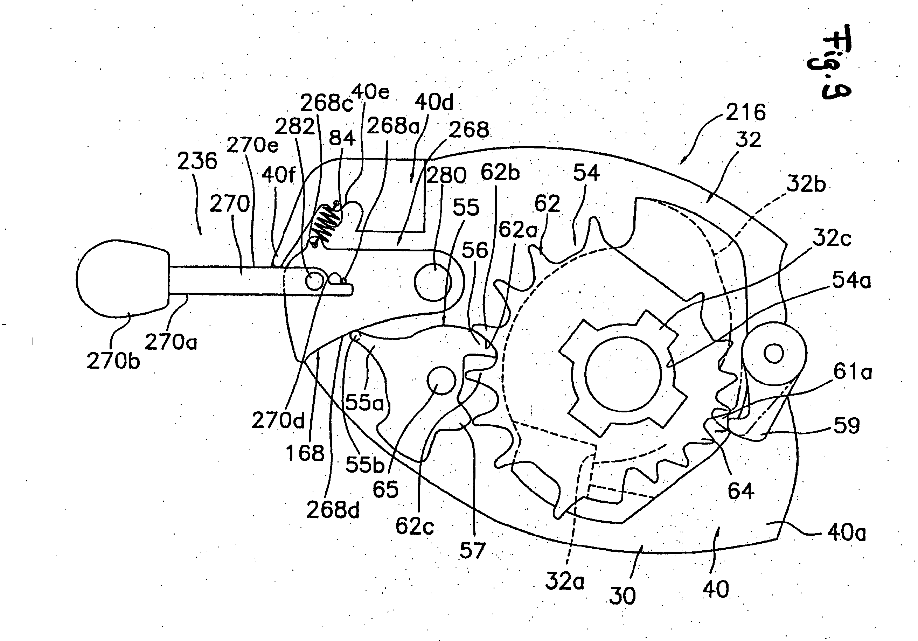

In the third embodiment, the second coil spring is not provided as shown in Figure 9. Therefore, the spring hooking portions or the like, which accompany the second coil spring, are not provided. Further, the positions of a first restricting portion 268a and a second restricting portion 270d differ. The details of the constructions and action except for those of a first operating member 236 of a rear shift operating part 216 are the same as the first embodiment, and therefore, the explanation of them will be omitted.

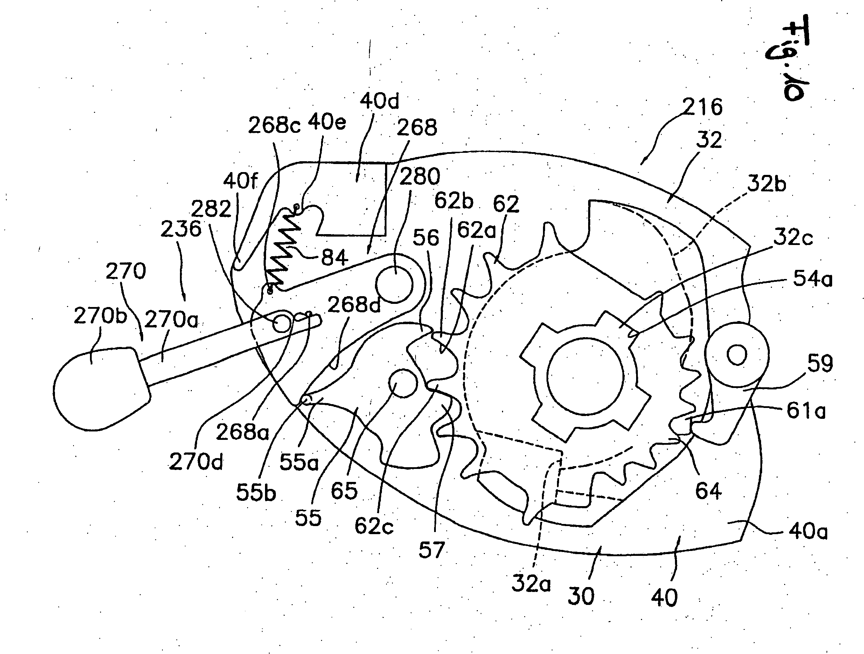

In Figure 9, the first operating member 236 has an action member 268 mounted swingably around a swing shaft (one example of the first shaft) 280 which is vertically provided at the bracket 40, and an input member 270 mounted around a swing shaft (one example of the second shaft) 282 which is vertically provided at an intermediate portion of the action member 268 to be spaced from the swing shaft 280. Both the swing shafts 280 and 282 are disposed substantially parallel. The action member 268 causes the position holding and releasing mechanism 34 to act by swing to the action position shown in Figure 10 from the neutral position shown in Figure 9 to move the winding body 32 in the cable releasing direction. Specifically, the action member 268 is moved to the action position from the neutral position by the input member 270 to move the positioning claw 56 to the release position from the engaging position. The action member 268 has the first restricting portion (one example of the first abutting portion) 268a which abuts on the input member 270, a second spring hooking portion 268c, and a pressing portion 268d which engages with the engaging pin 55b on its side surface.

The first restricting portion 268a is, for example, a pin-shaped member which is vertically provided close to the swing shaft 282 between the swing shaft 280 and the swing shaft 282, and abuts on a second restricting portion (one example of the first abutting portion) 270d which is provided at the input member 270. This first restricting portion 268a is provided to swing the input member 270 and the action member 268 integrally around the swing shaft 280 when the input member 270 is operated in the first direction toward the lower side in Figure 9. The second spring hooking portion 268c is disposed at the side surface at the wall portion 40d side as in the first embodiment and the other end of the first coil spring 84 is hooked at the second spring hooking portion 68c. The first coil spring 84 is provided to bias the action member 68 toward the neutral position where it is close to the wall portion 40d of the bracket 40. The pressing portion 268d is provided to link to the swing of the action member 268 toward the action position from the neutral position to rotate the swing body 55 counterclockwise, and to move the positioning claw 56 to the release position from the engaging position. The pressing portion 268d is constructed by an inclined surface that is inclined while smoothly curving.

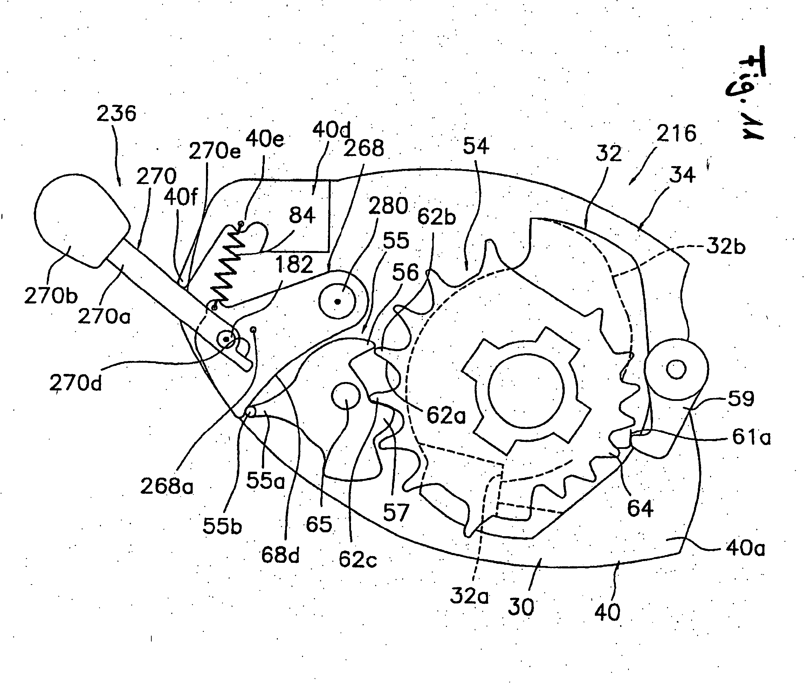

The input member 270 is a member that moves in the first direction shown in Figure 10 and in the second direction shown in Figure 11. The input member 70 has an arm member 270a swingably mounted to the swing shaft 282 vertically provided at the action member 268, and a knob portion 270b which is fixed to a tip end of the arm member 270a as shown in Figure 9. A base end portion of the first arm portion 270a extends from the support portion of the swing shaft 282 in the direction to separate from the knob portion 270b, and the second restricting portion 270d is provided at a side surface of the extended portion, at the wall portion 40d side. The second restricting portion 270d contacts the first restricting portion 268a as described above. A fourth restricting portion (one example of the second abutting portion) 270e which abuts on the third restricting portion 40f of the wall portion 40d is provided on the side surface, at the wall portion 40d side, of the intermediate portion of the arm member 270a.

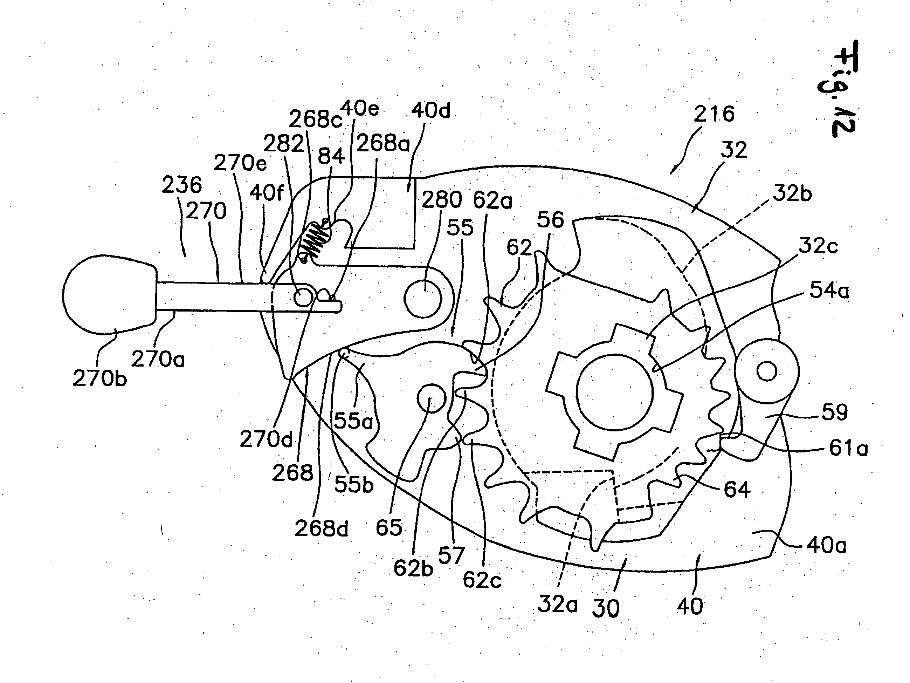

With such a construction, as in the first embodiment, when the input member 270 is operated in the first direction, the input member 270 and the action member 268 integrally swing counterclockwise around the swing shaft 280 toward the action position from the neutral position as shown in Figure 10. Then, the positioning claw 56 and the rotation preventing claw 57 act and the winding body 32 rotates in the cable releasing direction by the amount of one shift position as shown in Figure 12.

When the input member 270 is operated in the second direction, the fourth restricting portion 270e of the input member 270 contacts the third restricting portion 40f and the input member 270 swings clockwise around the swing shaft 282 as shown in Figure 11. Thereby, the action member 268 swings counterclockwise around the swing shaft 280 similarly to the time of operation in the first direction. As a result, the positioning claw 56 and the rotation preventing claw 57 act similarly to the operation in the first direction and the winding body 32 rotates in the cable releasing direction by the amount of one shift position as shown in Figure 12.

### <Fourth Embodiment>

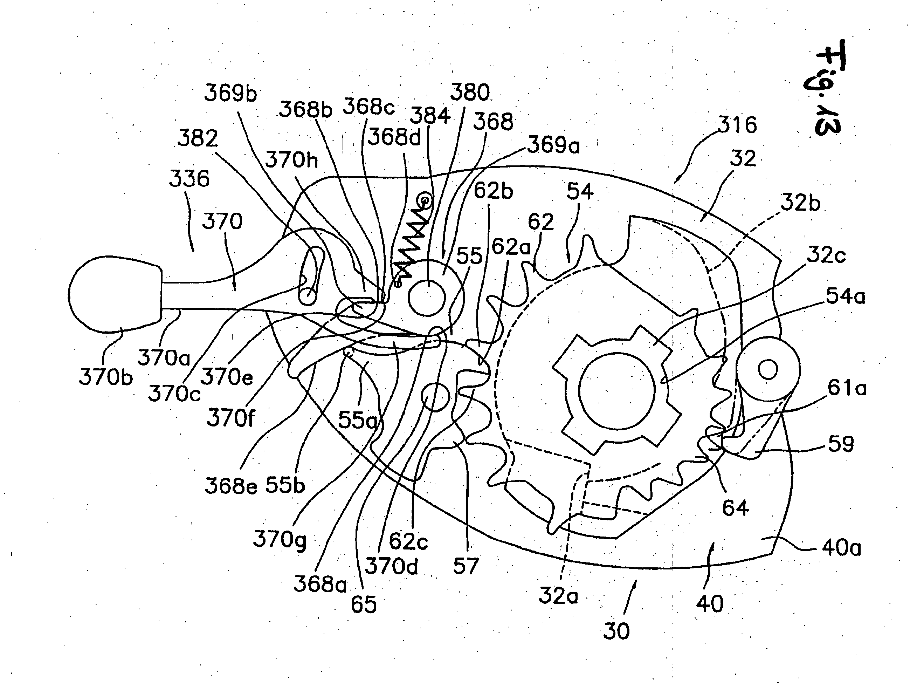

In the above described three embodiments, the input member is mounted to the action member, but the mounting position of the input member is not limited to the above described three embodiments. In a fourth embodiment, an input member 370 of a rear shift operating portion 316 is movably mounted to the bracket 40 as shown in Figure 13. In the fourth embodiment, the other constructions except for the first operating member are the same as those in the first embodiment, and therefore, the explanation thereof will be omitted.

The first operating member 336 has an action member 368 which is mounted swingably around a swing shaft (one example of the first shaft) 380 which is vertically provided at the bracket 40, and an input member 370 which is swingable around a swing shaft (one example of the third shaft) 382 which is vertically provided at the bracket 40 to be spaced from the swing shaft 380, as shown in Figure 13. Both swing shafts 380 and 382 are disposed substantially parallel.

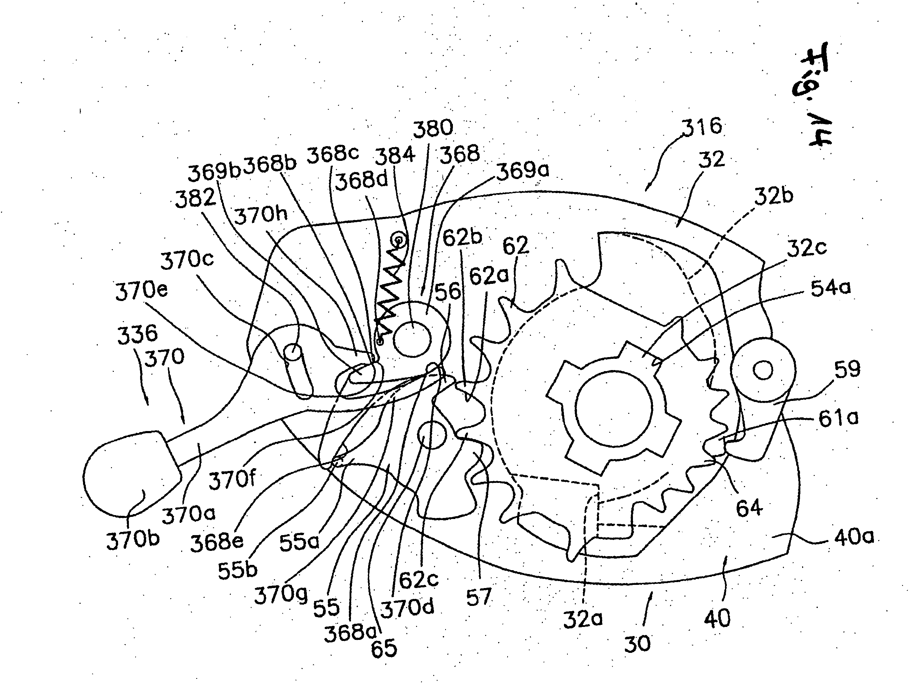

The action member 368 causes the position holding and releasing mechanism 34 to act by swing to the action position shown in Figure 14 from the neutral position shown in Figure 13 to move the winding body 32 in the cable releasing direction. Specifically, the action member 368 is moved to the action position from the neutral position by the input member 370 to move the positioning claw 56 to the release position from the engaging position. The action member 368 has a first to a third restricting portions (examples of the third to the fifth abutting portions) 368a to 368c which abut on the input member 370, a second spring hooking portion 368d, and a pressing portion 368e which engages with the engaging pin 55b on its side surface. The action member 368 has a circular main body portion 369a, and a first projected portion 369b which extends toward the input member 336 from the main body portion 369.

In Figure 13, the first restricting portion 368a is orthogonal to the straight line connecting the swing axes of a swing shaft 380 and a swing shaft 382, and is disposed at an outer peripheral surface of the main body portion 369a at a position where the straight line passing through the axis of the swing shaft 380 intersects the outer peripheral surface of the lower portion of the main body portion 369a. Namely, in Figure 13, the first restricting portion 368a is disposed at the outer peripheral surface of the main body portion 369a separated from the swing shaft 382 from a lower side of the swing shaft 380. The second restricting portion 368b is provided at a side surface at the upper side in Figure 13 of the first projected portion 369b. The first and the second restricting portions 368a and 368b are provided to swing the input member 370 and the action member 368 integrally around the swing shaft 380 when the input member 370 is operated in the first direction toward the lower side in Figure 13. They are provided to make the input member 370 rest at the intermediate position when the action member 368 which is biased by a first coil spring 384 that will be described later is in the neutral position.

The third restricting portion 368c is formed with a predetermined length on the top surface of the first projected portion 369b including the second restricting portion 368b. This length is longer than the length of contact of a sixth restricting portion (one example of a fifth abutting portion) that will be described later when the input member 370 moves in the second direction. The third restricting portion 368c is provided to swing the input member 370 around the swing shaft 382 with respect to the action member 368 and swing the action member 368 around the swing shaft 380 when the input member 370 is operated in the second direction toward the upper side in Figure 13. A second spring hooking portion 368d is provided at an edge portion of the main body portion 369a above the first projected portion 369b of the action member 368, and one end of the first coil spring 384 is hooked at the second spring hooking portion 368d. The other end of the first coil spring 384 is caught at the bracket 40. The first coil spring 384 biases the action member 368 toward the neutral position clockwise in Figure 13.

The pressing portion 368e is provided to link to the swing of the action member 368 toward the action position from the neutral position to rotate the swing body 55 counterclockwise via the catching pin 55b and move the positioning claw 56 to the release position from the engaging position. The pressing portion 368e is the same as in the first embodiment, and is constructed by an inclined surface which inclines while smoothly curving.

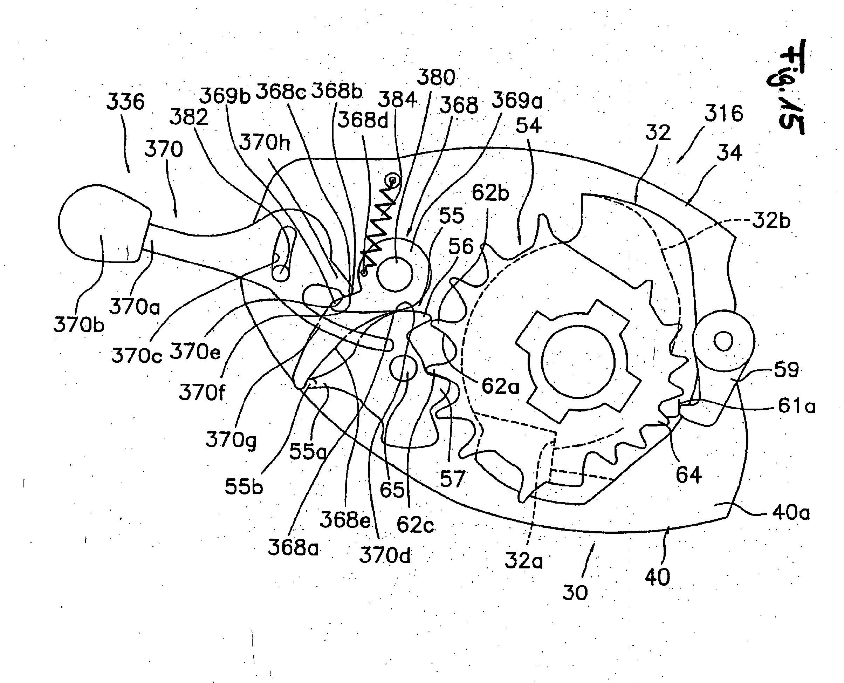

The input member 370 is a member that moves in the first direction shown in Figure 14 and in the second direction shown in Figure 15 from the intermediate position shown in Figure 13. The input member 370 has an arm member 370a which is mounted swingably around the swing shaft 382 which is vertically provided at the bracket 40, and a knob portion 370b which is fixed to a tip end of the arm member 370a, as shown in Figure 13. The arm member 370a is formed so that the intermediate portion is wider than the other portions. The arm member 370a has a long groove portion 370c in a circular arc shape at which the swing shaft 382 can be disposed at one end (lower end in Figure 13) when the action member 368 is disposed in the neutral position, at the wide intermediate potion. The long groove portion 370c is formed into the circular arc shape with the axis of the swing shaft 380 as a center. The long groove portion 370c is provided to prevent interference with the swing shaft 382 when the input member 370 swings in the first direction with the action member 368. It is also provided to restrict the swing range of the input member 370 in the first direction. The arm member 370a has a fourth and a fifth restricting portions (examples of the third and the fourth abutting portions) 370d and 370e which contact the action member 368 when the input member 370 moves in the first direction, and a sixth restricting portion (one example of the fifth abutting portion) 370f which contacts the action member 368 when the input member 370 swings in the second direction.

The fourth restricting portion 370d is formed on an upper side surface of the tip end of a second projected portion 370g which extends to the lower side of the first projected portion 369b of the action member 368 to be contactable to the first restricting portion 368a. The second projected portion 370g extends to the right side in Figure 13 from a lower side of the swing axis of the swing shaft 380 on the outer peripheral surface of the main body portion 369a of the action member 368. The fifth restricting portion 370e is disposed at the lower side surface of a third projected portion 370h which is disposed to sandwich the action member 368 with the second projected portion 370g to be contactable to the second restricting portion 368b. The third projected portion 370h extends to the position where it does not contact the outer peripheral surface of the main body portion 369a of the action member 368. The fourth and the fifth restricting portions 370d and 370e are formed to contact the first and the second restricting portions 368a and 368b of the action member 368 when the action member 368 is in the neutral position and the input member 370 is in the intermediate position, and when the input member 370 swings in the first direction. Since at this time, the first and the fourth restricting portions 368a and 370d are disposed to separate from the swing shaft 382 from the lower side of the swing axis of the swing shaft 380 as described above, the action member 368 does not rotate clockwise even when the fourth restricting portion 370d contacts the first restricting portion 368a. Since the fifth restricting portion 370e contacts the second restricting portion 368b and the fourth contact portion 370e contacts the first contact portion 368a, the input member 370 is biased by the first coil spring 384 via the action member 368 so that the swing shaft 382 is disposed at the lower end portion of the long groove portion 370c.

The sixth restricting portion 370f is formed at the tip end of the third projected portion 370h to be projected in the circular arc shape, and includes the fifth restricting portion 370e. The sixth restricting portion 370f is provided to move in contact with the third restricting portion 368c to swing the input member 370 clockwise around the swing shaft 382 and to swing the action member 368 counterclockwise around the swing shaft 380.

Next, a shift action of the rear shift operating part 316 will be described.

The action in the cable releasing direction is as follows.

When the knob portion 370b of the input member 370 of the first operating member 336 is operated in the first direction as shown in Figure 14, the fourth restricting portion 370d of the input member 370 contacts the first restricting portion 368a, while the fifth restricting portion 370e contacts the second restricting portion 368b, and the action member 368 is pressed by the fifth restricting portion 370e. When the action member 368 is pressed by the fifth restricting portion 370e, the input member 370 and the action member 368 can integrally swing around the swing shaft 380 counterclockwise in Figure 14 toward the action position from the neutral position even if the swing shaft 382 is disposed in the long groove portion 270c, because the long groove portion 370c is formed by the circular arc with the swing shaft 380 as the center. When the action member 368 swings toward the action position, the swing body 55 swings counterclockwise in Figure 13 from the state in which the positioning claw 56 is in the engaging position shown in Figure 13, and the positioning claw 56 moves to the release position shown in Figure 14 from the engaging position to separate from the positioning body 54. As a result, the positioning body 54 is biased in the cable releasing direction by the spring member 50, and therefore, the positioning body 54 rotates in the cable releasing direction. However, when the positioning claw moves to the release position, the rotation preventing claw 57, which is formed at the swing body 55 integrally with the positioning claw 56, moves to the contact position and stops rotation of the swing body 55. Therefore, the positioning body 54 stops at the position where the positioning claw 56 rides over the positioning tooth 62b with which the positioning claw 56 is engaged.

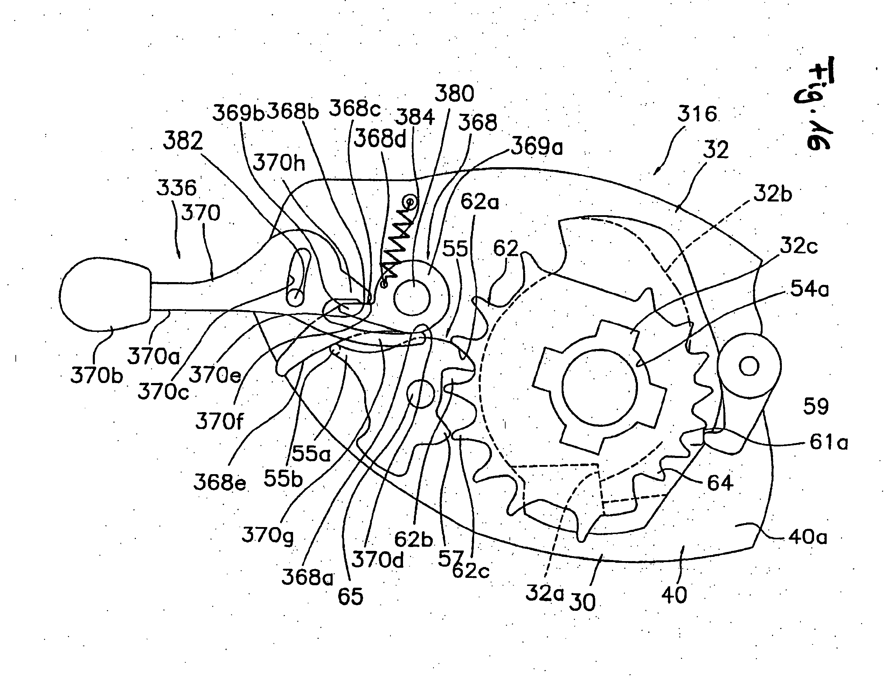

When the operation is stopped and a hand is taken off the knob portion 370b in this state, the action member 368 returns to the neutral position by the first coil spring 384 as shown in Figure 16. Then, the fifth restricting portion 370e is pressed by the second restricting portion 368b and the input member 370 also returns to the original intermediate position with the action member 368 as shown in Figure 16. Since the swing body 55 is biased by the spring member 58 so that the positioning claw 56 is disposed in the engaging position at this time, the swing body 55 swings clockwise, and the positioning claw 56 is disposed in the engaging position again. As a result, the positioning body 54 rotates in the cable releasing direction by the amount of one positioning tooth 62 and stops, and the winding body 32 rotates in the cable releasing direction by the amount of one shift position.

Meanwhile, when the knob portion 370b of the input member 370 of the first operating member 336 is operated in the second direction as shown in Figure 15, the sixth restricting portion 370f of the input member 370 contacts the third restricting portion 368c, and the input member 370 swings clockwise around the swing shaft 382 since the input member 370 is biased by the first coil spring 384 via the action member 368 so that the swing shaft 382 is disposed at the lower end portion of the long groove portion 370c. At this time, the fourth contact portion 370d separates from the first contact portion 368a. Thereby, the action member 368 swings counterclockwise in Figure 13 around the swing shaft 380 as at the time of operation in the first direction. When the action member 368 swings toward the action position, the swing body 55 swings counterclockwise from the state where the positioning claw 56 is in the engaging position shown in Figure 13, and the positioning claw 56 moves to the release position shown in Figure 15 from the engaging position and separates from the positioning body 54. As a result, the positioning body 54 is biased in the cable releasing direction by the spring member 50, and therefore, the positioning body 54 rotates in the cable releasing direction. However, when the positioning claw moves to the release position, the rotation preventing claw 57 which is formed at the swing body 55 integrally with the positioning claw 56 moves to the contact position, and stops rotation of the swing body 55. Therefore, the positioning body 54 stops at the position where the positioning claw 56 rides over the positioning tooth 62b with which the positioning claw 56 is engaged.

When the operation is stopped and a hand is taken off the knob portion 370b in this state, the action member 368 returns to the neutral position by the first coil spring 384. Then, the input member 370 swings counterclockwise around the swing shaft 382 and also returns to the original position as shown in Figure 16, since the sixth restricting portion 370f contacts the third restricting portion 368c. Since the swing body 55 is biased by the spring member 58 so that the positioning claw 56 is disposed in the engaging position at this time, the swing body 55 swings clockwise, and the positioning claw 56 is disposed in the engaging position again. As a result, the positioning body 54 rotates in the cable releasing direction by the amount of one positioning tooth 62 and stops, and the winding body 32 also rotates in the cable releasing direction by the amount of one shift position.

Here, the action member 368 moves in the same direction to the action position from the neutral position when the input member 370 is operated either in the first or the second direction. Therefore, the winding body 32 can be moved in the cable releasing direction by movement of the input member 370 both in the first direction and the second direction, and the operating direction of the input member 370 can be adapted to rider's preference. The winding body 32 and the positioning claw 56 are disposed parallel, and therefore, the shift operating part 16 can be disposed compactly.

In the fourth embodiment, the first contact portion 368a is formed to project outward in the diameter direction from the main body portion 369a to contact the tip end of the fourth restricting portion 370d. In this case, the functions of the second and the fifth restricting

### portions 368b and 370e become unnecessary.

### <Other embodiments>

(a) In the above described embodiment, the position holding and releasing mechanism 34 is constructed so as to shift by the amount of one positioning tooth 62 by one operation, but the position holding and releasing mechanism may be capable of changing the holding position of the winding body by the amount of a plurality of positions by one operation of the first operating member in at least either the first direction or the second direction. In this case, the holding position can be changed by the amount of a plurality of positions by one operation, and therefore, the cable release operation over a plurality of shift positions can be easily performed.
(b) In the above described embodiment, the shift operating device of the external transmission having the front derailleur and the rear derailleur is shown as an example, but the present invention is also applicable to the shift operating device of the internal transmission having an internal shift hub.
(c) In the above described embodiment, the mounting part 30 of the rear shift operating part 16 is a separate piece from the rear brake lever 12, but the mounting part may be integrally fixed to the bracket of the brake lever.

### [Brief Description of the Drawings]

[Figure 1]
   Figure 1 is a side view of a bicycle to which one embodiment of the present invention is mounted.
[Figure 2]
   Figure 2 is a bottom view of a rear shift operating part according to one embodiment of the present invention.
[Figure 3]
   Figure 3 is a schematic exploded perspective view of the same.
[Figure 4]
   Figure 4 is an enlarged plane view showing a positioning body, a positioning claw and a feed claw in the neutral position.
[Figure 5]
   Figure 5 is an enlarged plane view showing a cable release action when operated in the first direction.
[Figure 6]
   Figure 6 is an enlarged plane view showing the cable release action when operated in the second direction.
[Figure 7]
   Figure 7 is an enlarged plane view showing a finishing time of the cable release action.
[Figure 8]
   Figure 8 is a view of a second embodiment corresponding to Figure 4.
[Figure 9]
   Figure 9 is a view of a third embodiment corresponding to Figure 4.
[Figure 10]
   Figure 10 is a view of the third embodiment corresponding to Figure 5.
[Figure 11]
   Figure 11 is a view of the third embodiment corresponding to Figure 6.
[Figure 12]
   Figure 12 is a view of the third embodiment corresponding to Figure 7.
[Figure 13]
   Figure 13 is a view of a forth embodiment corresponding to Figure 4.
[Figure 14]
   Figure 14 is a view of the forth embodiment corresponding to Figure 5.
[Figure 15]
   Figure 15 is a view of the forth embodiment corresponding to Figure 6.
[Figure 16]
   Figure 16 is a view of the forth embodiment corresponding to Figure 7.

### [Description of Symbols]

15, 16 front and rear shift operating part
30 mounting part
32 winding body (one example of a cable catching body)
34 position holding and releasing mechanism
36, 136, 236, 336 first operating member
38, 138 second operating member
46 rotary shaft (one example of the first shaft)
40f third restricting portion (one example of the second abutting portion)
68, 168, 268, 368 action member
70, 170, 270, 370 input member
80, 280, 380 swing shaft (one example of the first shaft)
82, 282 (one example of the second shaft)
84, 184, 384 first coil spring (one example of the first biasing member)
86, 186 second coil spring (one example of the second biasing member)
68a, 168a, 268a first restricting portion (one example of the first abutting portion)
70d, 170d, 270d second restricting portion (one example of the first abutting portion)
70e, 170e, 270e fourth restricting portion (one example of the second abutting portion)
144f third restricting portion (one example of the first abutting portion)
182 swing shaft (one example of the second shaft)
368a to 368c first to third restricting portions (examples of the third to fifth abutting portions)
370d to 368f forth to sixth restricting portions (examples of the third to fifth abutting portions)
382 swing shaft (one example of the third shaft)

## Claims

1. A bicycle shift operating device (16), comprising:
a mounting part (30) mountable to a bicycle;
a cable catching body (32) mounted to said mounting part movably in a cable pulling
direction and a cable releasing direction;
a position holding mechanism (34) that selectively holds said cable catching body (32)
in any one of a plurality of holding positions;
**characterized in that** it further comprises
an action member (68) that is mounted to said mounting part (30) swingably around a first shaft (80), and causes said position holding mechanism to act by swinging to an action position from a neutral position to move said cable catching body (32) in only one of said cable pulling direction or said cable releasing direction; and
an input member (70) that moves said action member (68) to said action position from said neutral position by movement in a first direction and a second direction respectively, wherein said input member (70) is movably mounted either to the action member (68) swingably around a second shaft (82) or to the mounting part swingably around a third shaft

2. The bicycle shift operating device (16) according to claim 1, wherein said input member (70) is mounted to the action member (68) swingably around said second shaft (82) spaced from said first shaft (80).

3. The bicycle shift operating device (16) according to claim 1 or 2, wherein said input member (70) and said action member (68) respectively have first abutting portions (68a, 70d) which contact each other when said input member moves in said first direction, and integrally swing around said first shaft when said input member moves in said first direction.

4. The bicycle shift operating device (16) according to any one of claims 1 to 3, wherein said input member (70) and said mounting part (30) respectively have second abutting portions (40f, 70e) which contact each other when said input member moves in said second direction, and said input member swings around said second shaft and said action member swings around said first shaft, when said input member moves in said second direction.

5. The bicycle shift operating device (16) according to claim 4, wherein said first and second abutting portions are in contact with each other when said action member is in said neutral position.

6. The bicycle shift operating device (16) according to any one of claims 1 to 5, further comprising:
a first biasing member (84) which has one end caught at said mounting part and the other end caught at said action member, and biases said action member in a direction of said neutral position from said action position.

7. The bicycle shift operating device (16) according to claim 6, further comprising:
a second biasing member (86) which has one end caught at said action member and the other end caught at said input member, and biases said action member and said input member in a direction to bring them close to each other.

8. The bicycle shift operating device (16) according to claim 1, wherein said input member (370) is mounted to said mounting part swingably around a third shaft (382) which is spaced from said first shaft (380).

9. The bicycle shift operating device (16) according to claim 8, wherein said input member (370) and said action member (368) respectively have third and fourth abutting portions (370d, 368a, 370e, 368b) which contact each other when said input member moves in said first direction, and integrally swing around said first shaft when said input member moves in said first direction.

10. The bicycle shift operating device (16) according to any one of claims 8 to 9, wherein said input member (370) and said action member (368) respectively have fifth abutting portions (370f, 368c) which contact each other when said input member moves in said second direction, said input member swings around said third shaft, and said action member swings around said first shaft, when said input member moves in said second direction.

11. The bicycle shift operating device (16) according to any one of claims 8 to 10, further comprising:
a third biasing member that has one end caught at said mounting part and the other end caught at said action member, and biases said action member in a direction of said neutral position from said action position.

12. The bicycle shift operating device (16) according to any one of claims 9 to 11, wherein said input member has a long groove portion (3 70c) in a circular arc shape with said first shaft (380) as a center and said third shaft (382) capable of being disposed at one end when said action member (368) is disposed in said neutral position.

13. The bicycle shift operating member (16) according to any one of claims 1 to 12, wherein said position holding mechanism (34) has a positioning body movable integrally with said cable catching body (32) and having a plurality of positioning teeth (62), and a positioning member that engages with said positioning tooth and holds said cable catching body in any one of said plurality of holding positions.

14. The bicycle shift operating device (16) according to claim 13, wherein said positioning member is mounted to said mounting part movably between an engaging position where it engages with said positioning tooth and a release position where it does not engage with said positioning tooth, and is moved to said release position from said engaging position by swing of said action member to said action position from said neutral position.

## Patentansprüche

1. Fahrradschaltbedienvorrichtung (16), umfassend:
einen an einem Fahrrad montierbaren Montageabschnitt (30);
einen Kabeleingriffskörper (32), beweglich in einer Kabelzugrichtung und in einer Kabelfreigaberichtung an dem Montageabschnitt montiert;
einen Positionshaltemechanismus (34), welcher selektiv den Kabeleingriffskörper (32) in einer Vielzahl von Haltepositionen hält;
**dadurch gekennzeichnet, dass** sie ferner umfasst
ein Betätigungselement (68), welches an dem Montageabschnitt (30) schwenkbar bzgl. einer ersten Welle (80) montiert ist und den Positionshaltemechanismus zum Wirken veranlasst durch Verschwenken zu einer Betätigungsposition, ausgehend von einer neutralen Position, um den Kabeleingriffskörper (32) in lediglich einer unter der Kabelziehrichtung und der Kabelfreigaberichtung zu bewegen;
ein Eingabeelement (70), welches das Betätigungselement (68) von der neutralen Position zu der Betätigungsposition mittels Bewegung in einer ersten Richtung bzw. einer zweiten Richtung bewegt, wobei das Eingabeelement (70) beweglich montiert ist, entweder an dem Betätigungselement (68), schwenkbar bzgl. einer zweiten Welle (82) oder an dem Montageabschnitt, schwenkbar bzgl. einer dritten Welle.

2. Fahrradschaltbedienvorrichtung (16) nach Anspruch 1, bei welcher das Eingabeelement (70) schwenkbar um die zweite Welle (82), beanstandet von der ersten Welle (80) an dem Betätigungselement (68) montiert ist.

3. Fahrradschaltbedienvorrichtung (16) nach Anspruch 1 oder 2, bei welchem das Eingabeelement (70) und das Betätigungselement (68) jeweils erste Anschlagabschnitte (68a, 70b) aufweisen, die einander berühren, wenn sich das Eingabeelement in der ersten Richtung bewegt, und die integrale bzgl. der ersten Welle schwenken oder schwingen, wenn das Eingabeelement sich in der ersten Richtung bewegt.

4. Fahrradschaltbedienvorrichtung (16) nach einem der Ansprüche 1 bis 3, bei welcher das Eingabeelement (70) und der Montageabschnitt (30) jeweils zweite Anschlagabschnitt (40f, 70e) aufweisen, die einander berühren wenn sich das Eingabeelerrient in der zweiten Richtung bewegt, wobei das Eingabeelement bzgl. der zweiten Welle schwenkt und wobei das Betätigungselement bzgl. der ersten Welle schwenkt, wenn sich das Eingabeelement in der zweiten Richtung bewegt.

5. Fahrradschaltbedienvorrichtung (16) nach Anspruch 4, bei welcher die ersten und zweiten Anschlagsabschnitte miteinander in Berührung stehen, wenn das Betätigungselement in der neutralen Position vorliegt.

6. Fahrradschaltbedienvorrichtung (16) nach einem der Ansprüche 1 bis 5 ferner umfassend:
ein erstes Vorspannelement (84), von dem ein Ende mit dem Montageabschnitt und das andere Ende mit dem Betätigungselement in Eingriff vorliegen und welches das Betätigungselement in einer Richtung der neutralen Position aus der Betätigungsposition vorspannt.

7. Fahrradschaltbedienvorrichtung (16) nach Anspruch 6, ferner umfassend ein zweites Vorspannelement (86), mit einem Ende bzgl. dem Betätigungselement und dem anderen Ende bzgl. dem Eingabeelement in Eingriff vorliegend und das Bestätigungselement und das Eingabeelement in einer Richtung vorspannend, die diese einander annähert.

8. Fahrradschaltbedienvorrichtung (16) nach Anspruch 1, bei welcher das Eingabeelement (370) schwenkbar bzgl. einer dritten Welle (382), die von der ersten Welle (380) beabstandet ist, schwenkbar an dem Montageabschnitt montiert ist.

9. Fahrradschaltbedienvorrichtung (16) nach Anspruch 8, bei welcher das Eingabeelement (370) und das Betätigungselement (368) jeweils dritte und vierte Anschlagabschnitt (370d, 368a, 370e., 368b) aufweisen, die einander berühren wenn sich das Eingabeelement in der ersten Richtung bewegt, integral schwenkend bzgl. der ersten Welle, wenn das Eingabeelement sich in der ersten Richtung bewegt.

10. Fahrradschaltbedienvorrichtung (16) nach einem der Ansprüche 8 bis 9, bei welcher das Eingabeelement (370) und das Betätigungselement (368) jeweils fünfte Anschlagabschnitt (370f, 368c) aufweisen, die einander berühren, wenn sich das Eingabeelement in der zweiten Richtung bewegt, wobei das Eingabeelement bzgl. der dritten Welle schwenkt, und wobei das Betätigungselement bzgl. der ersten Welle schwenkt, wenn das Eingabeelement sich in der zweiten Richtung bewegt.

11. Fahrradschaltbedienvorrichtung (16) nach einem der Ansprüche 8 bis 10, ferner umfassend:
ein drittes Vorspannelement mit einem Ende bzgl. dem Montageabschnitt und dem anderen Ende bzgl. dem Betätigungselement in Eingriff befindlich, und das Betätigungselement in einer Richtung der neutralen Position von der Betätigungsposition vorspannend.

12. Fahrradschaltbedienvorrichtung (16) nach einem der Ansprüche 9 bis 11, bei welcher das Eingabeelement einen langen Rillenabschnitt (370c) in einer Kreisbogenform aufweist, und zwar mit der ersten Welle (380) als Mitte, wobei die dritte Welle (382) fähig ist an einem Ende angeordnet zu werden, wann das Betätigungselement (368) in der neutralen Position angeordnet ist.

13. Fahrradschaltbedienelement (16) nach einem der Ansprüche 1 bis 12, bei welcher der Positionshaltemechanismus (34) einen Positionierkörper aufweist, integral bewegbar mit dem Kabeleingriffskörper (32) und aufweisend eine Vielzahl von Positionierzähnen (62), sowie ein Positionierelement, welches mit den Positionierzähnen in Eingriff tritt und den Kabeleintrittkörper in einer der Vielzahl an Haltepositionen hält.

14. Fahrradschaltbedienvorrichtung (16) nach Anspruch 13, bei welcher das Positionierelement an dem Montageabschnitt beweglich montiert ist zwischen einer Eingriffsposition, in welcher es mit den Positionierzähnen in Eingriff steht und einer Freigabeposition, in welcher es nicht mit den Positionierzähnen in Eingriff steht, und bewegt wird hin zu der Freigabeposition von der Eingriffsposition mittels Schwenken des Betätigungselements zu der aktiven Position von der neutralen Position.

## Revendications

1. Dispositif de manoeuvre de changement de vitesse de bicyclette (16) comprenant :
une partie de montage (30) que l'on peut monter à une bicyclette ;
une partie de réception de câble (32) montée à ladite partie de montage avec possibilité de déplacement dans une direction de tirage de câble et dans une direction de libération de câble ;
un mécanisme de maintien de position (34) qui maintient sélectivement lesdites parties de réception de câble (32) dans une quelconque d'une pluralité de positions de maintien ;
**caractérisé en ce qu'**il comprend en outre
une pièce d'actionnement (68) qui est montée à ladite partie de montage (30) avec possibilité de pivotement autour d'un premier arbre (80), et amène ledit mécanisme de maintien de position à fonctionner en pivotant d'une position neutre à une position de fonctionnement pour déplacer ladite partie de réception de câble (32) dans une seule de la direction de tirage de câble ou de la direction de libération de câble ; et
un élément d'entrée (70) qui déplace ladite pièce d'actionnement (68) jusqu'à ladite position de fonctionnement à partir de ladite position neutre par mouvement dans, respectivement, une première direction et une seconde direction, dans lequel ledit élément d'entrée (70) est monté de façon mobile soit à la pièce d'actionnement (68) avec possibilité de pivotement autour d'un deuxième arbre (82), soit à la partie de montage avec possibilité de pivotement autour d'un troisième arbre.

2. Dispositif de manoeuvre de changement de vitesse de bicyclette (16) selon la revendication 1, dans lequel ledit élément d'entrée (70) est monté à la pièce d'actionnement (68) avec possibilité de pivotement autour dudit second arbre (82) espacé dudit premier arbre (80).

3. Dispositif de manoeuvre de changement de vitesse de bicyclette (16) selon la revendication 1 ou 2, dans lequel ledit élément d'entrée (70) et ladite pièce d'actionnement (68) ont respectivement des premières parties de butée (68a, 70d) qui se touchent l'une l'autre quand ledit élément d'entrée se déplace dans ladite première direction, et pivotent intégralement autour dudit premier arbre quand ledit élément d'entrée se déplace dans ladite première direction.

4. Dispositif de manoeuvre de vitesse de bicyclette (16) selon l'une quelconque des revendications 1 à 3, dans lequel ledit élément d'entrée (70) et ladite partie de montage (30) ont respectivement des secondes parties de butée (40f, 70e) qui se touchent l'une l'autre quand ledit élément d'entrée se déplace dans ladite seconde direction , et ledit élément d'entrée pivote autour du deuxième arbre et la pièce d'actionnement tourne autour du premier arbre , quand ledit élément d'entrée se déplace dans ladite seconde direction.

5. Dispositif de manoeuvre de changement de vitesse de bicyclette (16) selon la revendication 4, dans lequel lesdites première et seconde parties de butée sont en contact l'une l'autre quand la pièce d'actionnement est dans ladite position neutre.

6. Dispositif de manoeuvre de changement de bicyclette (16) selon l'une quelconque des revendications 1 à 5, comprenant, en outre :
un premier organe de rappel (84) qui une a extrémité en prise au niveau de ladite partie de montage et l'autre extrémité en prise au niveau de la pièce d'actionnement, et sollicite la pièce d'actionnement dans une direction de ladite position neutre à partir de ladite position de fonctionnement.

7. Dispositif de manoeuvre de changement de vitesse de bicyclette (16) selon la revendication 6, comprenant, en outre :
un second organe de rappel (86) qui a une extrémité en prise au niveau de la pièce d'actionnement et l'autre extrémité en prise au niveau de l'élément d'entrée, et sollicite la pièce d'actionnement et ledit élément d'entrée dans une direction pour les rapprocher l'une l'autre.

8. Dispositif de manoeuvre de changement de vitesse de bicyclette (16) selon la revendication 1, dans lequel ledit élément d'entrée (370) est monté à la partie de montage avec possibilité de pivotement autour d'un troisième arbre (382), qui est espacé dudit premier arbre (380).

9. Dispositif de manoeuvre de changement de vitesse de bicyclette (16) selon la revendication 8, dans lequel ledit élément d'entrée (370) et la pièce d'actionnement (368) ont respectivement des troisième et quatrième parties de butée (370d, 368a, 370e, 368b) qui se touchent les unes les autres quand ledit élément d'entrée se déplace dans ladite première direction, et pivotent intégralement autour du premier arbre quand ledit élément d'entrée se déplace dans ladite première direction.

10. Dispositif de manoeuvre de changement de vitesse de bicyclette (16) selon l'une quelconque des revendications 8 à 9, dans lequel ledit élément d'entrée (370) et la pièce d'actionnement (368) ont respectivement des cinquièmes parties de butée (370f, 368c) qui se touchent l'une l'autre quand ledit élément d'entrée se déplace dans ladite seconde direction , ledit élément d'entrée pivote autour du troisième arbre, et la pièce d'actionnement pivote autour du premier arbre, quand ledit élément d'entrée se déplace dans ladite deuxième direction.

11. Dispositif de manoeuvre de changement de vitesse de bicyclette (16) selon l'une quelconque des revendications 8 à 10, comprenant, en outre :
un troisième organe de rappel qui a une extrémité en prise au niveau de ladite partie de montage et l'autre extrémité en prise au niveau de la pièce d'actionnement, et sollicite la pièce d'actionnement dans une direction de ladite position neutre à partir de ladite position de fonctionnement.

12. Dispositif de manoeuvre de changement de vitesse de bicyclette (16) selon l'une quelconque des revendications 9 à 11, dans lequel ledit élément d'entrée a une longue partie de rainure (370c) en une forme d'arc circulaire avec ledit premier arbre (380) en tant que centre, ledit troisième arbre (382) pouvant être disposé à une extrémité quand la pièce d'actionnement (368) est disposée dans ladite position neutre.

13. Dispositif de manoeuvre de changement de vitesse de bicyclette (16) selon l'une quelconque des revendications 1 à 12, dans lequel ledit mécanisme de maintien de position (34) a un corps de positionnement pouvant être déplacé intégralement avec ladite partie de réception de câble (32) et ayant une pluralité de dents de positionnement (62), et un membre de positionnement qui s'engage avec lesdits dents de positionnement et maintient ladite partie de réception de câble dans l'une quelconque de ladite pluralité de positions de maintien.

14. Dispositif de manoeuvre de changement de vitesse de bicyclette (16) selon la revendication 13, dans lequel ledit membre de positionnement est monté à ladite partie de montage avec possibilité de déplacement entre une position d'enclenchement où il s'engage avec ladite dent de positionnement et une position de libération où il ne s'engage pas avec lesdits dents de positionnement , et est déplacé jusqu'à ladite position de libération à partir de ladite position d'enclenchement par le pivotement dudit membre de fonctionnement jusqu'à la position de fonctionnement à partir de ladite position neutre.
